# EUROPEAN PATENT APPLICATION

(11) **EP 4 098 468 A1**
(43) Date of publication of application: **07.12.2022**
(21) Application number: 21748453.4
(22) Date of filing: 19.01.2021
(51) Int. Cl.: B60K 35/00, G09F 21/04, G03B 21/00, G03B 21/14

(54) **VEHICULAR INFORMATION DISPLAY SYSTEM AND INFORMATION DISPLAY SYSTEM**

(30) Priority: 31.01.2020 JP 2020014762
(71) Applicant: Maxell, Ltd., Kyoto 618-8525 (JP)
(72) Inventor: HIRATA Koji, Otokuni-gun, Kyoto 618-8525 (JP); SUGIYAMA Toshinori, Otokuni-gun, Kyoto 618-8525 (JP); FUJITA Koji, Otokuni-gun, Kyoto 618-8525 (JP); TAKAGI Eiji, Otokuni-gun, Kyoto 618-8525 (JP)
(74) Representative: Mewburn Ellis LLP
(86) International application number: PCT/JP2021/001739
(87) International publication number: WO 2021/153358

(57) **Abstract**

A light source device 101 that supplies light in a specific polarization direction to an information display device 48 includes a point-shaped or planar light source 201, an optical means 15 for reducing the divergence angle of light from the light source, and a light guide 203 having a reflection surface that reflects light from the light source to propagate to the information display device. The reflection surface of the light guide 203 is arranged so as to face the information display device 48, and reflects specific polarized image light displayed on the information display device to be displayed on the window glass 220, which is an information display surface. Therefore, an information display system is realized in which the inside of the window glass 220 can be visually recognized from the outside or the outside of the window glass 220 can be visually recognized from the inside when image information is not displayed.

## Description

### TECHNICAL FIELD

The present invention relates to a vehicular information display system and an information display system using a light source device.

### BACKGROUND ART

In addition to an information display system that directly displays image information to the outside, an information display system that performs display by controlling the diffusion characteristics of image light using a transmissive screen is already known. For example, according to Patent Documents 1 and 2, a transparent or reflective screen including a light diffusion layer containing a binder or fine particles is already known.

### CITATION LIST

### PATENT DOCUMENT

Patent Document 1: Japanese Patent No. 6133522
Patent Document 2: Japanese Patent No. 6199530

### SUMMARY OF THE INVENTION

### PROBLEMS TO BE SOLVED BY THE INVENTION

However, in the conventional projection type information display system or device described above, no consideration is given to improving the light utilization efficiency by making image light efficiently (effectively) reach the observer outside the vehicle or outdoors and accordingly reducing the power consumption of the device including a light source and the like. Therefore, the present invention provides a technique capable of suitably displaying image information on the outside or inside of the space.

### SOLUTIONS TO PROBLEMS

In order to solve the above problems, for example, the configuration described in the claims is adopted. The present application includes a plurality of means for solving the aforementioned problems. For example, as a light source device for supplying light in a specific polarization direction to an information display device, a point-shaped or planar light source, an optical means for reducing a divergence angle of light from the light source, and a light guide having a reflection surface that reflects light from the light source to propagate to the information display device. The reflection surface of the light guide is arranged so as to face the information display device. Between the information display device and the reflection surface, a reflective polarizing plate and a retardation plate are arranged sequentially from the information display device side. Light in a specific polarization direction reflected by the reflective polarizing plate is transmitted through the retardation plate, reflected by the reflection surface of the light guide, and passes through the retardation plate. As a result, conversion in the polarization direction is performed, and light in a specific polarization direction propagates to the information display device. A part or entirety of the divergence angle of the light flux incident on the information display device from the light source is controlled by the shape and surface roughness of the reflection surface provided in the light source device.

### EFFECTS OF THE INVENTION

According to the present invention, it is possible to suitably display the image information on the outside of the space. Issues, configurations, and effects other than those described above will be clarified by the description of the following embodiments.

### BRIEF DESCRIPTION OF THE DRAWINGS

Fig. 1 is a diagram showing an example of the overall configuration of an information display system.
Fig. 2 is a diagram showing an example in which an information display system is applied to a bus that is a vehicle.
Fig. 3 is a diagram showing an example in which an information display system is applied to a train that is a vehicle.
Fig. 4 is a diagram showing an example of a specific configuration of an information display device.
Fig. 5 is a cross-sectional view showing an example of a specific configuration of a light source device.
Fig. 6 is a cross-sectional view showing an example of a specific configuration of a light source device.
Fig. 7 is a diagram showing an example of a specific configuration of an information display device.
Fig. 8 is a cross-sectional view showing an example of a specific configuration of a light source device.
Fig. 9 is a cross-sectional view showing an example of a specific configuration of a light source device.
Fig. 10 is a cross-sectional view showing an example of a specific configuration of a light source device.
Fig. 11 is a cross-sectional view showing an example of a specific configuration of an information display device.
Fig. 12 is a cross-sectional view showing an example of a specific configuration of an information display device.
Fig. 13 is a cross-sectional view showing an example of a specific configuration of an information display device.
Fig. 14 is a cross-sectional view showing an example of a specific configuration of an information display device.
Fig. 15 is an explanatory diagram of a unidirectional transparent sheet (transmissive type).
Fig. 16 is an explanatory diagram of a unidirectional transparent sheet (transmissive type).
Fig. 17 is a first characteristic diagram showing the wavelength characteristics of the reflectance of a reflection mirror.
Fig. 18 is a second characteristic diagram showing the wavelength characteristics of the reflectance of a reflection mirror.
Fig. 19 is a characteristic diagram showing the characteristics of a reflective polarizing plate.
Fig. 20 is a diagram showing the image light diffusion characteristics of an information display device.
Fig. 21 is a diagram showing the image light diffusion characteristics of an information display device.
Fig. 22 is a diagram showing the wavelength distribution of natural light such as sunlight.
Fig. 23 is a diagram showing the reflectance of glass with respect to P-polarized light and S-polarized light.

### MODE FOR CARRYING OUT THE INVENTION

The following embodiment relates to an information display system that can make image information based on image light from a large-area image light emission source transmitted through a transparent member that partitions the space, such as the glass of a show window, and displayed outside a store (space), for example. In addition, the embodiment relates to a vehicular information display system that projects an image to the outside or inside through the windshield, rear glass, or side glass of an automobile or a train (hereinafter, referred to collectively as a "vehicle") by using such an information display system.

According to the following embodiment, it is possible to provide a new and highly usable information display system that can display high-resolution image information on, for example, the glass surface of a show window and the rear glass, windshield, or side glass of a vehicle and that can significantly reduce the power consumption of the device including a light source by making the divergence angle of emitted image light small, that is, by making the divergence angle of emitted image light be an acute angle and aligning the emitted image light with a specific polarized wave so that the image light efficiently reaches the observer to improve the light utilization efficiency. In addition, it is possible to provide a vehicular information display system capable of performing so-called unidirectional display, which can be visually recognized inside or outside a vehicle through a shield glass including the windshield, rear glass, or side glass of the vehicle or a transparent sheet provided on the shield glass.

In addition, as a conventional vehicular information display system that displays image information toward the outside of the vehicle, there is a system in which LED chips are arranged in a matrix and lit up according to the image information. In such a system, (1) since the diffusion angle of the LED chip is wide, a large amount of electric power is required to obtain a desired brightness. In addition, (2) each LED chip to obtain the desired brightness has a large dimension, and accordingly, high resolution cannot be obtained with an information display system having dimensions that can be mounted on a vehicle. In addition, (3) trying to prevent the device from becoming large makes it difficult to display image information in color.

On the other hand, when image information is displayed toward the outside of the vehicle by an information display device using a conventional high-resolution color displayable liquid crystal panel, the brightness of the image is insufficient. For this reason, for example, under the scorching sun, there is a problem that the display content cannot be identified. In order to solve this problem, when a high-power LED light source that generates a large amount of light flux is used as a backlight, the power consumption increases and the heat generation of the LED increases, and accordingly, the system becomes larger for this measure. For this reason, it is difficult to use the system as a vehicular information display system.

Hereinafter, embodiments of the present invention will be described in detail with reference to the diagrams and the like. In addition, the present invention is not limited to the description of the embodiments, and various changes and modifications by those skilled in the art can be made within the scope of the technical ideas disclosed in this specification. In addition, in all the diagrams for describing the present invention, those having the same function are denoted by the same reference numerals, and the repeated description thereof may be omitted.

### <Information display system>

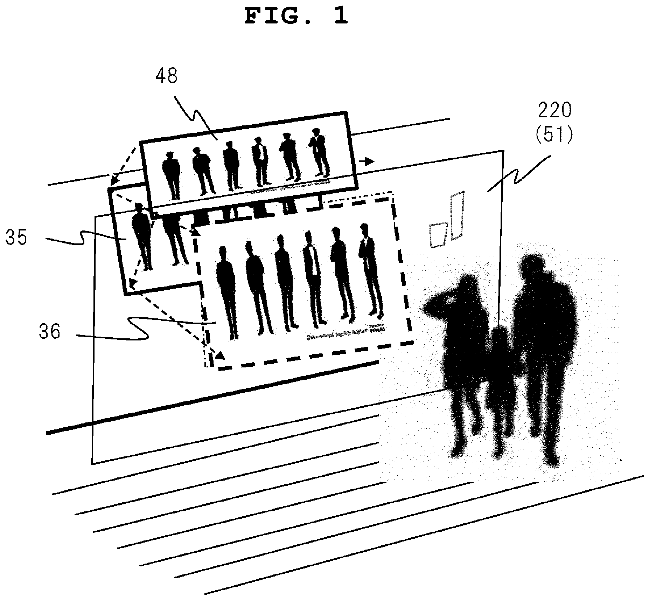

Fig. 1 shows the overall configuration of an information display system according to the present embodiment. For example, in a store or the like, the space is partitioned by a show window (also referred to as "window glass") 220, which is a light transmissive member such as glass, and according to the information display system of the present embodiment, image information can be transmitted through such a transparent member and displayed in one direction with respect to the outside of the store (space). In addition, in Fig. 1, with the inside of the show window 220 (inside the store) as a depth direction, the outside (for example, a sidewalk) is shown to be in front.

More specifically, as shown in Fig. 1, an information display device 48 (described in detail below) that includes a light source to generate and project image light to be displayed is arranged on the upper surface or in the diagonal direction of the show window 220, which is a transparent member such as glass, and image light generated by the information display device 48 is reflected by a reflection mirror 35 provided on the opposite surface to reflect a specific polarized wave and is displayed as a reflected image 36 in one direction with respect to the outside by the action of a transparent sheet (film) 51 bonded to the show window 220 (described in detail below). According to this, it is possible to display various kinds of information on the outside by using the show window 220, so that it is possible to significantly improve the show window utilization efficiency.

In addition, the mirror 35 that reflects the specific polarized wave transmits the other polarized wave. Therefore, when information is not displayed, the mirror 35 becomes translucent, so that the inside of the show window 220 (inside the store) can be seen from the outside of the store. For this reason, unlike the conventional information display device that directly displays image information on a liquid crystal display device, a view inside the store is not affected when information is not displayed.

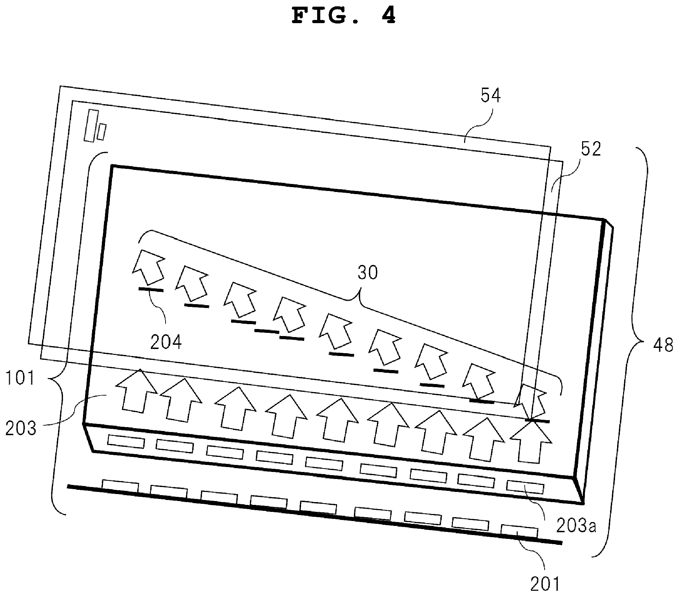

Next, Fig. 4 shows a more specific configuration of the information display system. An information display element 52 that makes up the information display device 48 is, for example, a relatively large liquid crystal display panel having a screen size of 15 inches or more. In addition, in order to perform correction at a practically acceptable level by distortion correction, the resolution of the panel is preferably 1280 x 720 dots or higher, and in order to display image information as a still image or a moving image on the outside in addition to text information, a resolution of 1980 x 1080 dots or higher is desirable.

In addition, the information display device 48 includes the information display element 52 (liquid crystal display panel) and a light source device 101 that makes up a light source thereof. In Fig. 4, the light source device 101 is shown as a developed perspective view together with the liquid crystal display panel.

As shown by an arrow 30 in Fig. 4, the liquid crystal display panel (information display element 52) has a narrow-angle diffusion characteristic due to the light from the light source device 101, which is a backlight device. That is, the liquid crystal display panel (information display element 52) obtains an illumination light flux having characteristics similar to laser light with strong directivity (straightness) and one-way polarization plane and emits image light, which is obtained by performing modulation according to the input image signal, toward the transparent sheet 51 provided on the surface of the window glass 220. In addition, in Fig. 4, the information display system is configured to include a liquid crystal display panel 52 that makes up the information display device 48, a light direction conversion panel 54 for controlling the directional characteristic of the light flux emitted from the light source device 101, and a narrow-angle diffusion plate (not shown) as needed. That is, polarizing plates are provided on both surfaces of the liquid crystal display panel 52, so that specific polarized image light is emitted by modulating the intensity of the light with an image signal (see the arrow 30 in Fig. 4). As a result, a desired image is projected onto window glass 220 through the light direction conversion panel 54 as specific polarized light having high directivity (straightness), and is transmitted toward the eyes of the observer outside the store (space) through the transparent sheet 51 provided on the surface thereof. In addition, a protection cover 50 may be provided on the surface of the light direction conversion panel 54 described above.

In the present embodiment, in order to improve the utilization efficiency of an emitted light flux 30 from the light source device 101 and significantly reduce the power consumption, in the information display device 48 configured to include the light source device 101 and the liquid crystal display panel 52, high directivity is given for the brightness of image light, which is the light (see the arrow 30 in Fig. 4) from the light source device 101 and is transmitted or diffused through the transparent sheet 51 provided on the surface of the window glass 220, by an optical component such as a lenticular lens or a transparent panel. According to this, the image light from the information display device 48 efficiently reaches the observer outside (for example, a sidewalk) the show window 220 with high directivity (straightness) like laser light. As a result, it is possible to display high-quality image information with high resolution and to significantly reduce the power consumption of the information display device 48 including an LED element 201 of the light source device 101.

### <Example 1 of information display device>

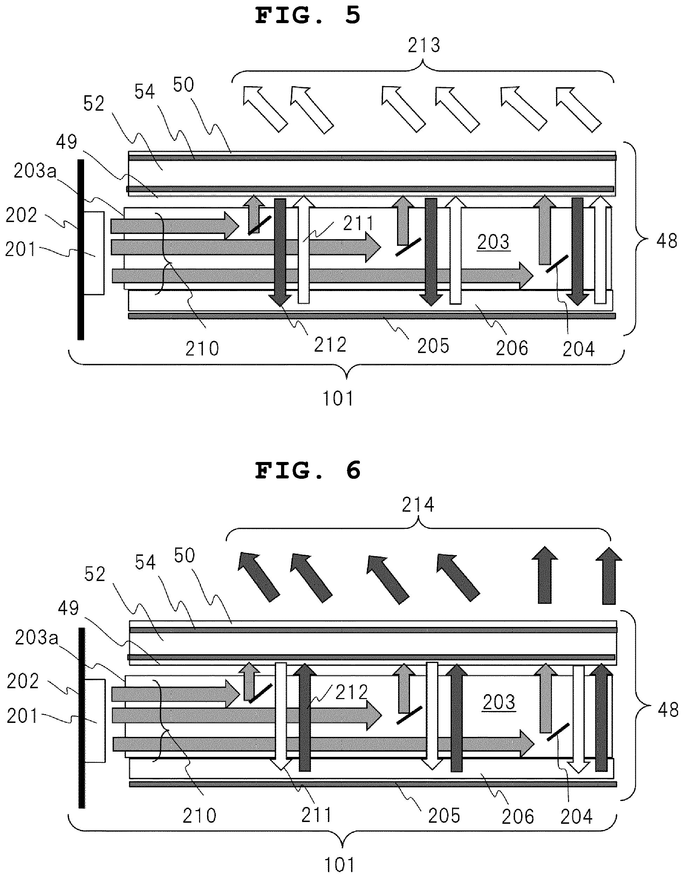

Fig. 5 shows an example of a specific configuration of the information display device 48. In Fig. 5, the liquid crystal display panel 52 and the light direction conversion panel 54 are arranged on the light source device 101 of Fig. 4. The light source device 101 is formed of, for example, plastic or the like in the shape of a case shown in Fig. 4, and is configured to house the LED element 201 and a light guide 203 thereinside. On the end surface of the light guide 203, in order to convert divergent light from each LED element 201 into an approximately parallel light flux as shown in Fig. 4, a lens shape having a shape whose cross-sectional area gradually increases toward a light receiving portion and having a function of gradually reducing the divergence angle by performing total reflection multiple times when the divergent light propagates therethrough is provided. The liquid crystal display panel 52 that makes up the information display device 48 is attached to the upper surface thereof. In addition, an LED (Light Emitting Diode) element 201, which is a semiconductor light source, or an LED substrate 202 on which a control circuit thereof is mounted may be attached to one side surface (in this example, an end surface on the left side) of the case of the light source device 101, and a heat sink, which is a member for cooling the heat generated by the LED element and the control circuit, may be attached to the outer surface of the LED substrate 202.

In addition, to a frame (not shown) of a liquid crystal display panel attached to the upper surface of the case of the light source device 101, the liquid crystal display panel 52 attached to the frame, an FPC (Flexible Printed Circuits) (not shown) electrically connected to the liquid crystal display panel, and the like are attached. That is, the liquid crystal display panel 52, which is a liquid crystal display element, generates a display image by modulating the intensity of transmitted light based on a control signal from a control circuit (not shown) that makes up an electronic device together with the LED element 201, which is a solid light source. At this time, since the generated image light has a narrow diffusion angle and only a specific polarized component, a new information display device that is close to a surface-emitting laser image source driven by an image signal and has never existed before is obtained. In addition, at present, it is technically and safety-wise impossible to obtain a laser light flux having the same size as an image obtained by the above-described information display device 48 by using a laser device. Therefore, in the present embodiment, for example, light close to the above-described surface-emitting laser image light is obtained from a light flux from a general light source including an LED element.

Subsequently, the configuration of an optical system housed in the case of the light source device 101 will be described in detail with reference to Figs. 5 and 6.

Since Figs. 5 and 6 are cross-sectional views, only one of a plurality of LED elements 201 that make up the light source is shown, and these are converted into approximately collimated light by the shape of a light receiving end surface 203a of the light guide 203. For this reason, the LED element and the light receiving portion on the end surface of the light guide are attached while maintaining a predetermined positional relationship. In addition, the light guide 203 is formed of a light transmissive resin such as acrylic, for example. Then, an LED light receiving surface at the end of the light guide has, for example, a conical convex outer peripheral surface obtained by rotating a paraboloid cross section, the top thereof has a concave portion in which a convex portion (that is, a convex lens surface) is formed in its central portion, and the central portion of the flat surface portion has a convex lens surface protruding outward (or may be a concave lens surface recessed inward) (not shown). In addition, the external shape of the light receiving portion of the light guide to which the LED element 201 is attached is a paraboloid shape that forms a conical outer peripheral surface, and is set within the range of an angle at which light emitted from the LED element in the peripheral direction can be totally reflected thereinside, or a reflection surface is formed.

On the other hand, each LED element 201 is arranged at a predetermined position on the surface of the so-called LED substrate 202, which is a circuit board thereof. The LED substrate 202 is fixed to an LED collimator (light receiving end surface 203a) by arranging the LED element 201 on the surface so as to be located at the central portion of the concave portion described above.

According to such a configuration, since the light beams emitted from the LED element 201 can be extracted as approximately parallel light beams by the shape of the light receiving end surface 203a of the light guide 203, it is possible to improve the utilization efficiency of the generated light.

As described above, the light source device 101 is configured by attaching a light source unit, in which a plurality of LED elements 201 as light sources are arranged, to the light receiving end surface 203a which is a light receiving portion provided on the end surface of the light guide 203. The divergent light flux from the LED element is guided through inside the light guide 203 (direction parallel to the diagram) as approximately parallel light beams, as shown by an arrow, by the lens shape of the light receiving end surface 203a of the light guide end surface, and is emitted toward the liquid crystal display panel 52 arranged approximately parallel to the light guide (direction perpendicular to the front from the diagram) by a light flux direction changing means 204. By optimizing the distribution (density) of the light flux direction changing means according to the shape of the inside or the surface of the light guide, the uniformity of the light flux incident on the liquid crystal display panel 52 can be controlled. By providing, for example, a portion having a different refractive index in the shape of the surface of the light guide or inside the light guide, the light flux direction changing means 4 described above emits the light flux propagating through the light guide toward the liquid crystal display panel 52 (in a direction perpendicular to the front from the diagram) arranged approximately parallel to the light guide. At this time, if a relative brightness ratio when comparing the brightness at the center of the screen with the brightness of a peripheral portion of the screen in a state in which the liquid crystal display panel 52 faces the center of the screen and the viewpoint is placed at the same position as the diagonal dimension of the screen is 20% or more, there is no problem in practical use. If the relative brightness ratio exceeds 30%, the characteristics will be even better.

In addition, Fig. 5 is a cross-sectional layout diagram for explaining the configuration of the light source of the present embodiment for polarization conversion and its function in the light source device 101 including the light guide 203 and the LED element 201 described above. In Fig. 5, the light source device 101 is configured to include, for example, the light guide 203 in which the light flux direction changing means 204 is provided on the surface or inside formed of plastic or the like, the LED element 201 as a light source, a reflection sheet 205, a retardation plate 206, and a lenticular lens, and the liquid crystal display panel 52 including a polarizing plate on its light source light incidence surface and image light emission surface is attached to the upper surface of light source device 101.

In addition, a film or sheet-shaped reflective polarizing plate 49 is provided on the light source light incidence surface (lower surface of the diagram) of the liquid crystal display panel 52 corresponding to the light source device 101, so that a polarized wave on one side (for example, a P wave) 212 of natural light flux 210 emitted from the LED element 201 is selectively reflected and reflected by the reflection sheet 205 provided on one surface (lower part of the diagram) of the light guide 203 to be directed toward the liquid crystal display panel 52 again. Therefore, a retardation plate (λ/4 plate) is provided between the reflection sheet 205 and the light guide 203 or between the light guide 203 and the reflective polarizing plate 49, and light is reflected by the reflection sheet 205 and accordingly the light passes through the retardation plate twice. As a result, since the reflected light flux is converted from P-polarized light to S-polarized light, the utilization efficiency of the light source light as image light is improved. As shown in Fig. 1, the image light flux (arrow 213 in Fig. 5) whose light intensity is modulated by the image signal on the liquid crystal display panel 52 is incident on the window glass 220 at a large incidence angle. Therefore, since the reflectance of the transparent sheet 51 increases, it is possible to obtain good diffusion characteristics for observation inside or outside the store (space).

Similar to Fig. 5, Fig. 6 is a cross-sectional layout diagram for explaining the configuration of the light source of the present embodiment for polarization conversion and its function in the light source device 101 including the light guide 203 and the LED element 201. Similarly, the light source device 101 is also configured to include, for example, the light guide 203 in which the light flux direction changing means 204 is provided on the surface or inside formed of plastic or the like, the LED element 201 as a light source, the reflection sheet 205, the retardation plate 206, and a lenticular lens, and the liquid crystal display panel 52 including a polarizing plate on its light source light incidence surface and image light emission surface is attached to the upper surface of light source device 101 as the information display device 48.

In addition, the film or sheet-shaped reflective polarizing plate 49 is provided on the light source light incidence surface (lower surface of the diagram) of the liquid crystal display panel 52 corresponding to the light source device 101, so that a polarized wave on one side (for example, an S wave) 211 of the natural light flux 210 emitted from the LED light source 201 is selectively reflected and reflected by the reflection sheet 205 provided on one surface (lower part of the diagram) of the light guide 203 to be directed toward the liquid crystal display panel 52 again. Therefore, a retardation plate (λ/4 plate) is provided between the reflection sheet 205 and the light guide 203 or between the light guide 203 and the reflective polarizing plate 49, and light is reflected by the reflection sheet 205 and accordingly the light passes through the retardation plate twice. As a result, since the reflected light flux is converted from S-polarized light to P-polarized light, the utilization efficiency of the light source light as image light is improved. As shown in Fig. 1, even if the image light flux (arrow 214 in Fig. 6) whose light intensity is modulated by the image signal on the liquid crystal display panel 52 is incident on the window glass 220 at a large incidence angle, reflection on the surface is reduced. Therefore, it is possible to efficiently diffuse the image light to the outside with the transparent sheet 51.

In the light source device 101 shown in Figs. 5 and 6, in addition to the function of the polarizing plate provided on the light incidence surface of the corresponding liquid crystal display panel 52, in order to reflect the polarized component on one side with the reflective polarizing plate, the contrast ratio theoretically obtained is the product of the reciprocal of the cross transmittance of the reflective polarizing plate and the reciprocal of the cross transmittance obtained by the two polarizing plates attached to the liquid crystal display panel. Therefore, high contrast performance can be obtained. In practice, it was confirmed by experiments that the contrast performance of the displayed image was improved by 10 times or more. As a result, a high-quality image comparable to that of the self-luminous organic EL was obtained.

### <Example 2 of information display device>

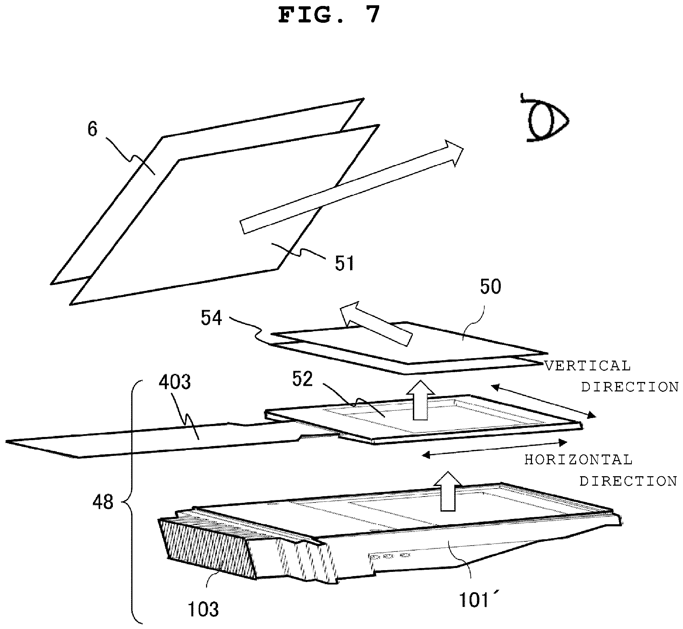

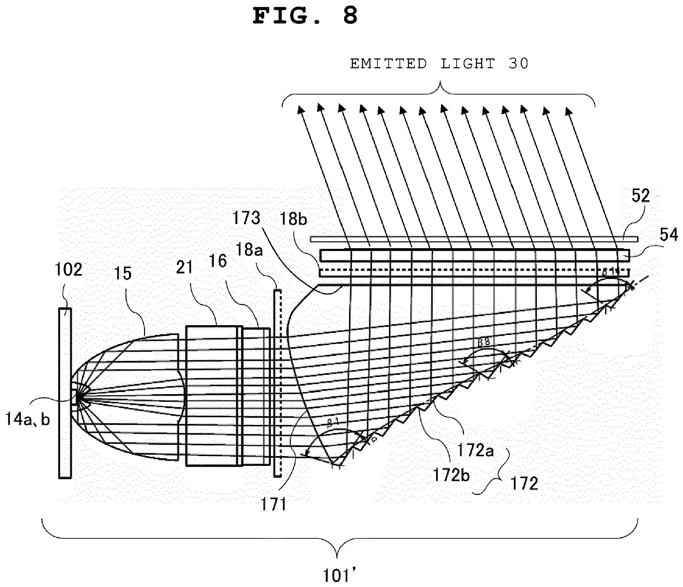

Fig. 7 shows another example of a specific configuration of the information display device 48. A light source device 101' in Fig. 7 is shown in detail in the light source device 101' of Fig. 8. As also shown in the diagram, the light source device 101' is formed of, for example, plastic in its case (see Fig. 7) and houses an LED, a collimator, a synthetic diffusion block, a light guide, and the like thereinside, and the liquid crystal display panel 52 is attached to the upper surface of the light source device 101'. In addition, LED (Light Emitting Diode) elements 14a and 14b, which are semiconductor light sources, or an LED substrate 102 on which a control circuit thereof is mounted are attached to one side surface of the case of the light source device 101', and a heat sink 103, which is a member for cooling the heat generated by the LED elements and the control circuit, is attached to the outer surface of the LED substrate 102 (see Figs. 7 and 8).

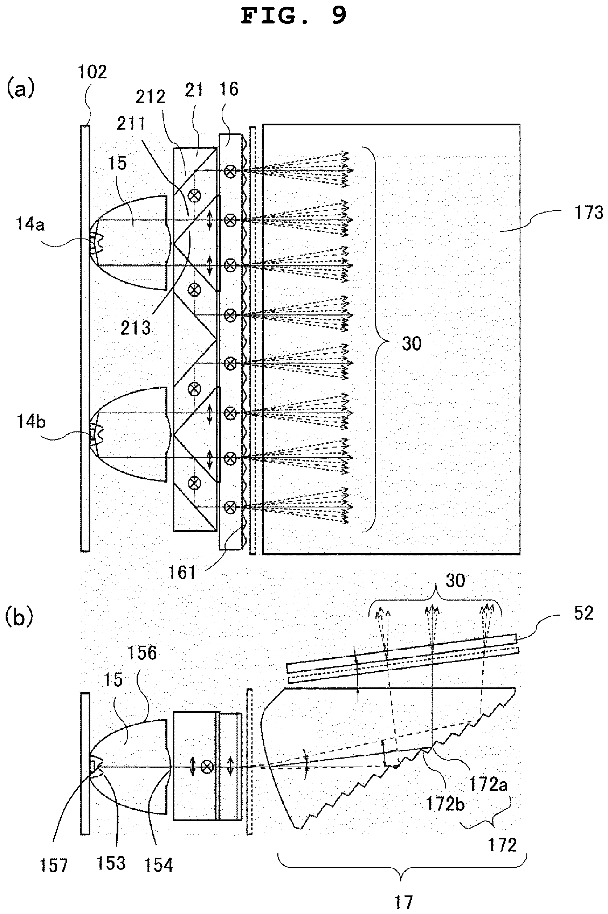

Figs. 9(a) is a top view of Fig. 8, in which divergent light beams from the LED 14a are reflected by the outer wall surface of a collimator lens 15 to be aligned with a specific polarized wave as approximately parallel light beams by a polarization conversion element 21, totally reflected by a reflection surface 172b provided in an oblique side portion 172 of a light guide 17 shown in Fig. 9(b), and incident on a liquid crystal panel 52 that is an information display element. By modulating the light intensity according to the image signal, information display is realized.

In addition, as shown in Fig. 7, to the liquid crystal display panel frame attached to the upper surface of the case, the liquid crystal display panel 52 attached to the frame, an FPC (Flexible Printed Circuits) 403 electrically connected to the liquid crystal display panel 52, and the like are attached. That is, the liquid crystal display panel 52, which is a liquid crystal display element, generates a display image by modulating the intensity of transmitted light based on a control signal from a control circuit (not shown herein) that makes up an electronic device together with the LED elements 14a and 14b, which are solid light sources.

### <Example 3 of information display device>

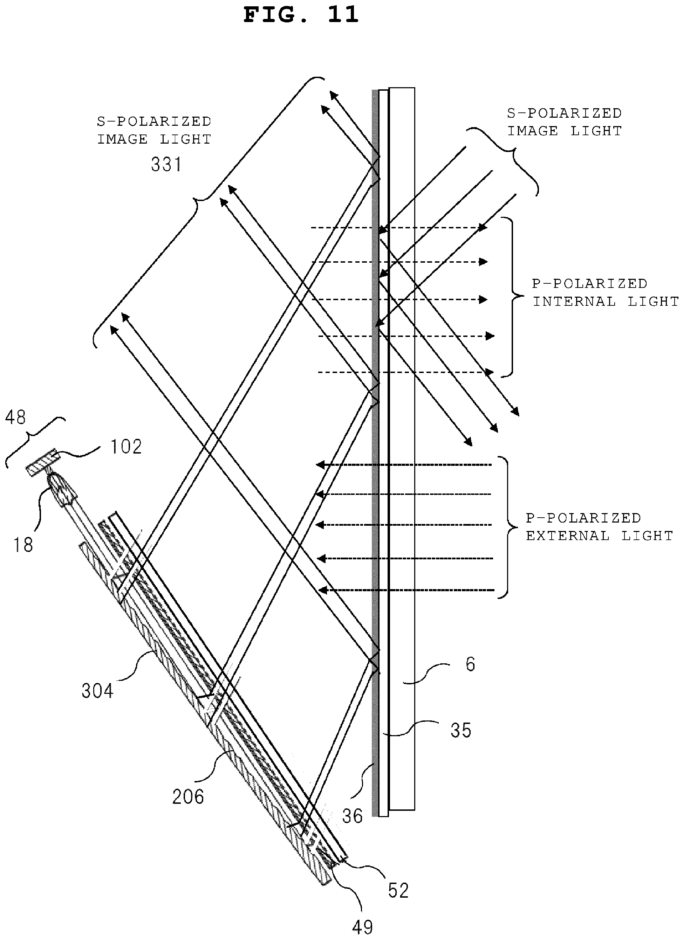

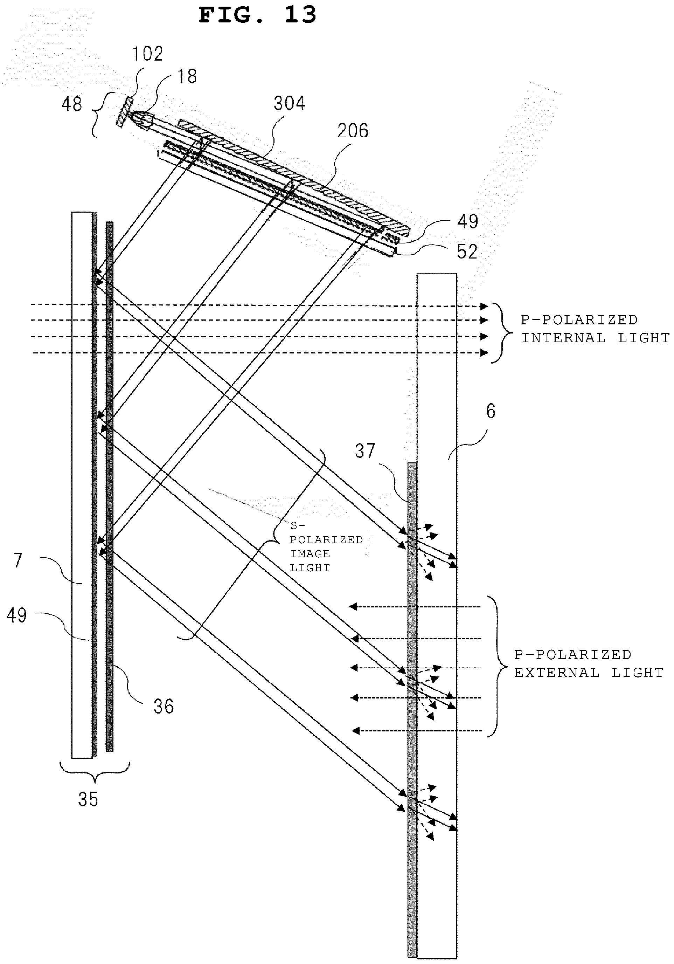

Subsequently, another example of a specific configuration of the information display device 48 will be described with reference to Fig. 11. The light source device of the information display device 48 will be described later with reference to Fig. 13. The divergent light flux of natural light (a mixture of P-polarized wave and S-polarized wave) from the LED is converted into an approximately parallel light flux by a collimator lens 18 and reflected toward the liquid crystal display panel 52 by a reflective light guide 304. The reflected light is incident on the wavelength plate and the reflective polarizing plate 49 arranged between the liquid crystal display panel 52 and the reflective light guide 304. A specific polarized wave (for example, an S-polarized wave) is reflected by the reflective polarizing plate and returns to the reflection surface with its phase converted by the wavelength plate, and passes through the retardation plate again to be converted into a polarized wave (for example, a P-polarized wave) that passes through the reflective polarizing plate.

As a result, the natural light from the LED is aligned with a specific polarized wave (for example, a P-polarized wave) and is incident on the liquid crystal display panel 52, and the brightness is modulated according to the image signal to display the image on the panel surface. As in the example described above, a plurality of LEDs that make up the light source are shown (although only one is shown in Figs. 11 to 15 due to the vertical cross section), and these are mounted at predetermined positions with respect to an LED collimator 18. In addition, the LED collimator 18 is formed of a light transmissive resin such as acrylic or glass, for example. Then, the LED collimator 18 has a conical convex outer peripheral surface obtained by rotating a parabolic cross section, and the top thereof has a concave portion in which a convex portion (that is, a convex lens surface) is formed in its central portion. In addition, the central portion of the flat surface portion has a convex lens surface protruding outward (or may be a concave lens surface recessed inward). In addition, the paraboloid that forms the conical outer peripheral surface of the LED collimator 18 is set within the range of an angle at which light emitted from the LED in the peripheral direction can be totally reflected thereinside, or a reflection surface is formed. The light beams converted into approximately parallel light beams by the LED collimator 18 are reflected by a reflection surface 206 of the reflective light guide 304, and a specific polarized wave (in the present embodiment, a P-polarized wave) is reflected by the action of the reflective polarizing plate 49 and passes twice through a λ/4 plate provided in a flat portion provided on the reflection surface 206 of the reflective light guide 304, so that the reflected light of the P wave is polarized and converted into an S-polarized wave to pass through the reflective polarizing plate. As a result, random light from the LED substrate 102 is aligned with a specific polarized wave (in the present embodiment, an S-polarized wave) and is incident on the liquid crystal display panel 52.

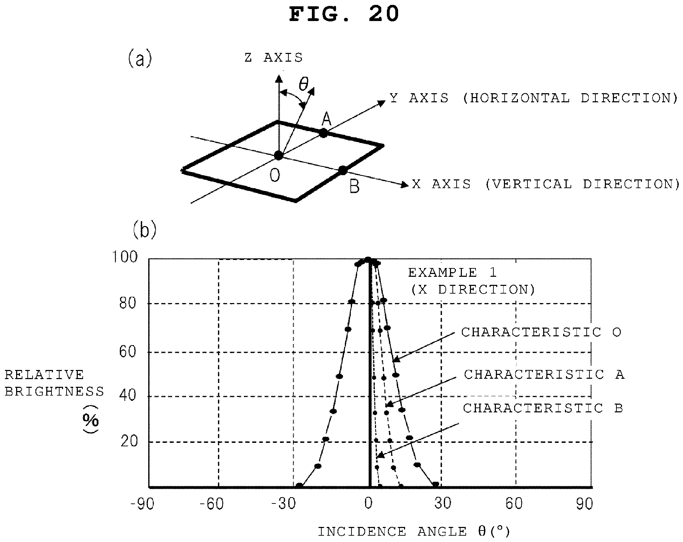

In the conventional TV set, the light emitted from the liquid crystal display panel 52 has similar diffusion characteristics in both the horizontal direction of the screen (displayed as a Y axis in Fig. 20(a)) and the vertical direction of the screen (displayed as an X axis in Fig. 20(a)). On the other hand, regarding the diffusion characteristics of the light flux emitted from the liquid crystal display panel of the present embodiment, for example, as shown in Example 1 of Fig. 20, the viewing angle at which the brightness is 50% of that in front view (angle 0°) is set to 13°, which is 1/5 of the conventional 62°. Similarly, the viewing angle in the vertical direction is set to be uneven up and down to suppress the viewing angle on the upper side to about 1/3 of the viewing angle on the lower side, so that the reflection angle of the reflective light guide and the area of the reflection surface and the like are optimized. As a result, the amount of image light toward the observation direction is significantly improved as compared with the conventional liquid crystal TV, and the brightness is 50 times or more.

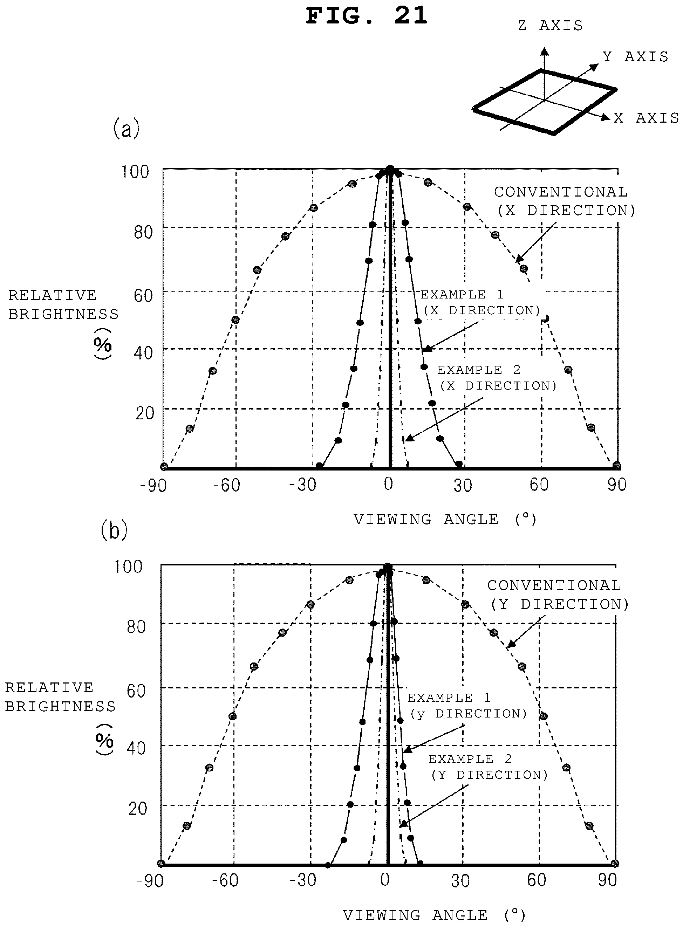

In addition, according to the viewing angle characteristic shown in Example 2 of Fig. 21, the viewing angle at which the brightness is 50% of that in front view (angle 0°) is set to 5°, which is 1/12 of the conventional 62°. Similarly, the viewing angle in the vertical direction is set to be even up and down to suppress the viewing angle to about 1/12 of the conventional one, so that the reflection angle of the reflective light guide and the area of the reflection surface and the like are optimized. As a result, the amount of image light in the observation direction is significantly improved as compared with the conventional liquid crystal TV, and the brightness is 100 times or more. As described above, by setting the viewing angle as a narrow angle, the amount of light flux toward the observation direction can be concentrated, so that the efficiency of light utilization is significantly improved. As a result, even if a conventional liquid crystal display panel for TV is used, it is possible to realize a significant improvement in brightness with the same power consumption by controlling the light diffusion characteristics of the light source device, and it is possible to obtain an information display device corresponding to an information display system for the outdoors.

As a basic configuration, as shown in Fig. 11, a light flux having a narrow-angle directional characteristic is incident on the liquid crystal display panel 52 by the light source device 48 and the brightness is modulated according to the image signal, so that the image information displayed on the screen of the liquid crystal display panel 52 is displayed outdoors or outside the vehicle through the window glass 6. At this time, the transparent sheet 51, which will be described later, may be provided on the glass surface in order to control the image light diffusion characteristic or reduce the influence of the degradation of the image quality due to external light.

In the present embodiment, the information display device 48 is arranged below the glass 6, and the image light of a specific polarized wave (for example, an S-polarized wave) having a narrow-angle diffusion characteristic is reflected upward by the reflection mirror (reflective polarizing plate) 35 that is provided on the glass 6 to reflect the specific polarized wave (S-polarized wave). As a result, the image information displayed on the information display device 52 can be visually recognized. In addition, although the image information (S-polarized wave) cannot be visually recognized from the outside of the glass 6, the image information displayed on the information display device 48 can be visually recognized from the inside.

On the other hand, when the inside is viewed from the outside of the glass 6, a situation inside the glass can be visually recognized because the other P-polarized wave passes through the glass 6. In addition, by providing a tint plate 36 having a uniform light absorption characteristic for light in the visible light region of 380 nm to 780 nm on the observation side surface of the reflection mirror 35, specular reflection (for example, S polarization) when no image is displayed can be reduced. Therefore, even if the reflection mirror (reflective polarizing plate) 35 is directly viewed, there is no glare. At this time, in order to obtain a good antiglare effect, it is desirable to select the tint plate 36 having a transmittance in the range of 85% to 65%. Similarly, by providing a tint plate (not shown) on the other surface of the reflection mirror 35 or the other surface of the glass 6 in order to reduce the reflection of the S-polarized wave of the external light, the reflection of the S-polarized component of the external light can be reduced. Therefore, the feeling of glare is reduced. At this time, when observing the inside partitioned by the glass 6 from the outside, the light transmittance is reduced by two tint plates. For this reason, it is desirable to select a tint plate having a light transmittance that is approximately twice that in the case of one tint plate.

### <Example 4 of information display device>

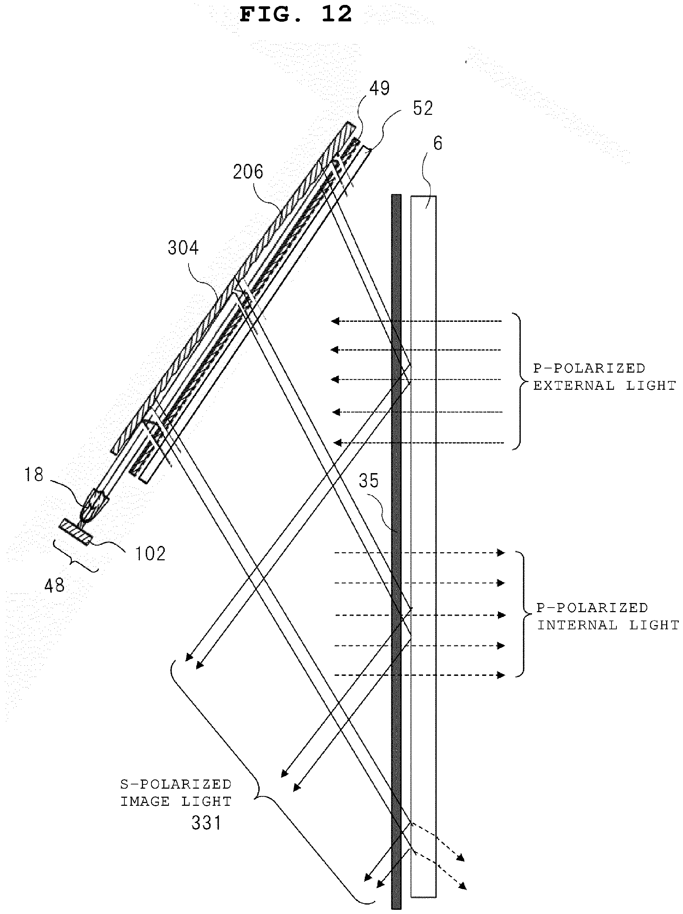

Fig. 12 shows another example of a specific configuration of the information display device 48. The difference from Fig. 11 is that the liquid crystal display panel 52, which is an information display device, is arranged on the upper surface of the glass 6 so as not to face the glass 6. Therefore, the image light is reflected by the reflection mirror (reflective polarizing plate 49) 35 provided on the glass surface to reflect the specific polarized wave, and reflected light 331 can be visually recognized from the lower left direction of the diagram. By optimally selecting the relative position between the information display device 48 and the glass 6 to reflect the image light as the reflected light 331 in a desired direction, the image information can be visually recognized even in the room or the vehicle partitioned by the glass 6. Since the other configuration is the same as that in Fig. 11, the description thereof will be omitted.

### <Example 5 of information display device>

Fig. 13 shows another example of a specific configuration of the information display device 48. The difference from Fig. 11 is that the liquid crystal display panel 52, which is an information display device, is arranged above the glass 6 and the image light (s-polarized wave in the present embodiment) from the information display device 52 is reflected by the mirror 35 that reflects a specific polarized wave and diffused in a direction different from the image light incidence surface of the window glass 6 by a diffusion sheet 37 provided on the opposite window glass 6. Since the other polarized wave is transmitted through the reflection mirror 35, a scenery inside the window glass 6 (left side in the diagram) can be observed from the outside of the window glass 6 (right side in Fig. 6). As a result, in the information display device of the present invention, unlike a normal display device, it is possible to obtain the effect unique to the present application that the inside of the window glass 6 can be visually recognized from the outside even in the information non-display state, which cannot be realized by the conventional information display device.

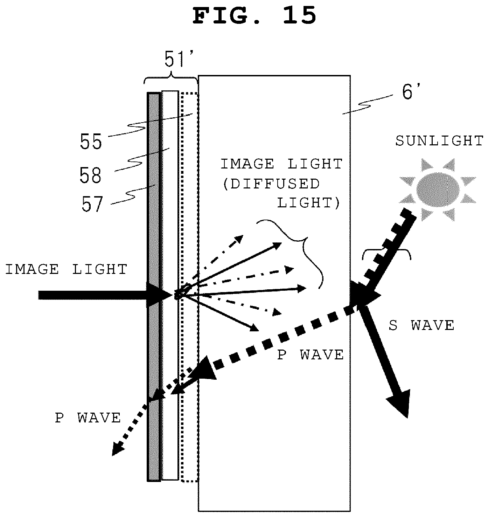

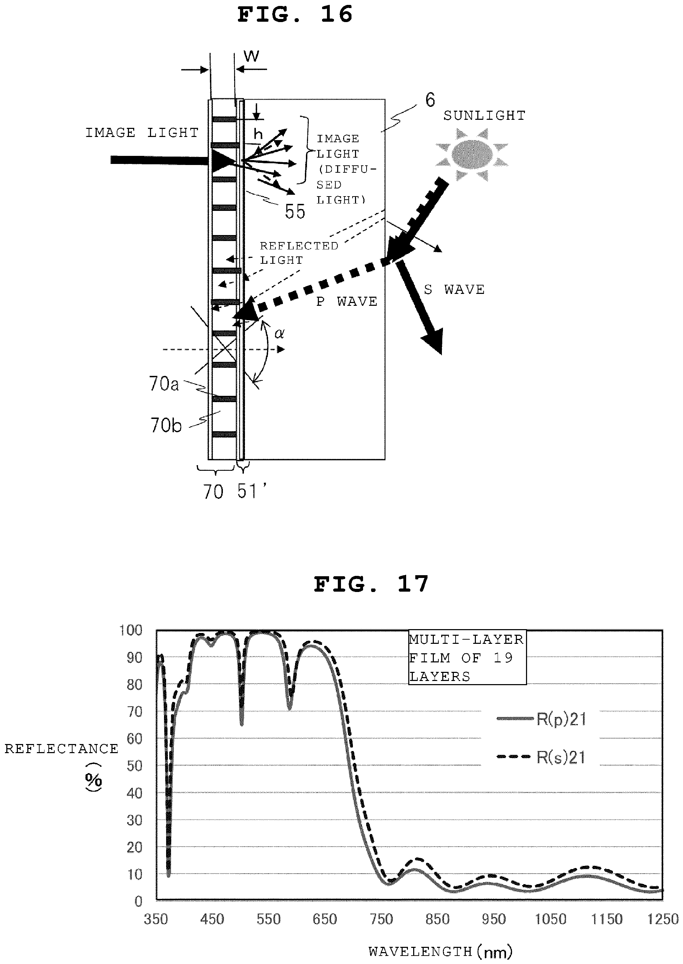

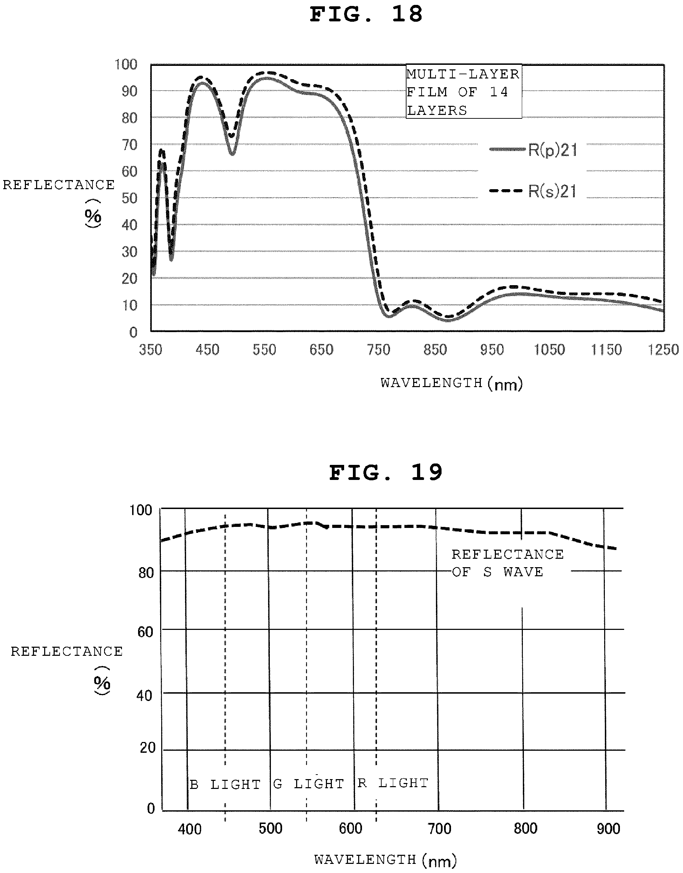

In addition, the reflection mirror 35 used at this time attaches or bonds the reflective polarizing plate 49 to a transparent substrate 7. On the opposite surface of the transparent substrate 7, the tint plate 36 is bonded or fixed to the reflective polarizing plate 49. For example, as shown in Fig. 19, if the light transmittance of the tint plate is selected to have almost the same transmittance in the visible light region of 380 to 780 nm, the color tone of the image light is not changed, and the degradation of the contrast performance can be reduced even if external light is incident. Although the details will be described later, a unidirectional diffusion sheet shown in Figs. 15 and 16 is provided at a position where the image light of the window glass 6 passes. In addition, when it is desired to display high-brightness image information, a high-brightness image with high directivity can be obtained by directly observing the image light through the window glass 6 without providing a diffusion sheet.

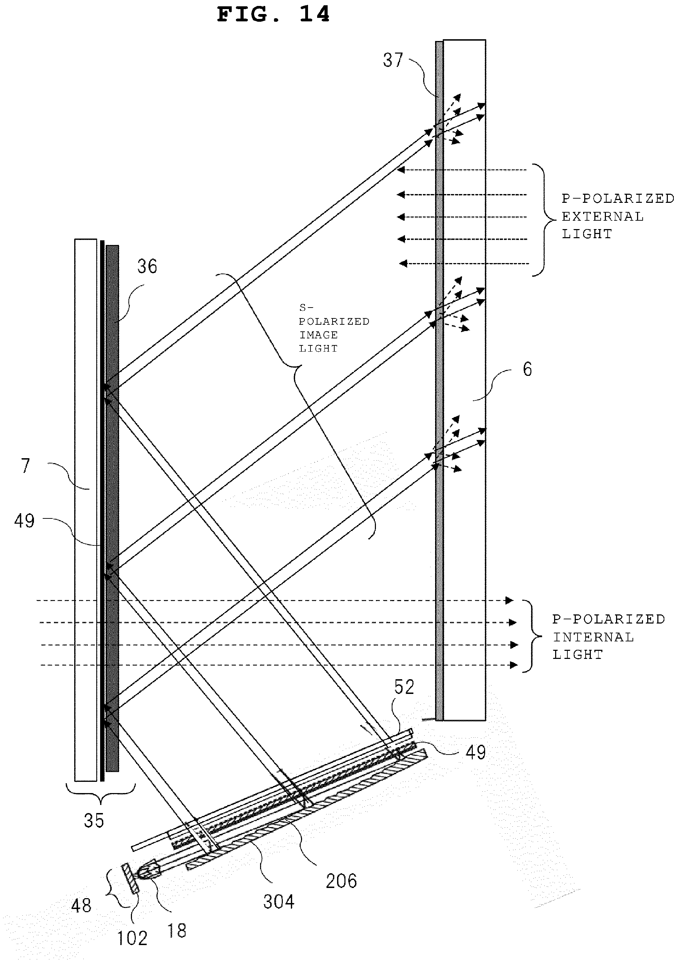

Fig. 14 shows another example of a specific configuration of the information display device 48. The difference from Fig. 13 is that the liquid crystal display panel 52, which is an information display device, is arranged below the glass 6 and the image light (s-polarized wave in the present embodiment) from the information display device 52 is reflected by the mirror 35 that reflects a specific polarized wave and diffused in a direction different from the image light incidence surface of the window glass 6 by a diffusion sheet 37 provided on the opposite window glass 6. Since the operations of the components are the same as those in the embodiment shown in Fig. 13, detailed explanations thereof will be omitted. In the information display device described above, it is assumed that a light source that generates a specific polarized wave described below is applied, but it is needless to say that natural light can be generated and an image of a specific polarized wave can be obtained by the liquid crystal panel.

In the embodiment of the present invention shown in Figs. 13 and 14, instead of the reflective polarizing plate 49 provided on the mirror 35 that reflects a specific polarized wave, a reflection mirror having a spectral reflectance characteristic shown in Figs. 17 and 18 may be used. In this mirror, a metal multi-layer film may be provided on the surface of glass or plastic, which is a base material, and a reflection characteristic with increased reflectance of a specific wavelength may be realized with a multi-layer film configuration having a small number of layers in consideration of the characteristics of the filter corresponding to the RGB pixels of the liquid crystal panel 52. In addition, in order to reduce the influence of sunlight incidence on the polarizing plate or the liquid crystal panel, the reflectance of light having a wavelength longer than 850 nm (near infrared light) and blue light near 400 nm is suppressed to a low level, so that it is possible to reduce damage caused by sunlight on the information display device. Fig. 17 shows the characteristics when a metal multi-layer film of 19 layers is formed, and Fig. 18 shows the characteristics when a metal multi-layer film of 14 layers is formed. In order to further increase the reflectance of blue image light, green image light, and red image light required for color image generation, it is necessary to increase the number of films formed, but the cost increases. Therefore, for the optimum number of films, it is necessary to compare the performance and cost to obtain the optimum value.

In the characteristics shown in Figs. 17 and 18, the reflectance is too high for both P polarization and S polarization. Therefore, the reflectance itself was used as a parameter to make a prototype, and the appearance of the image and the appearance of transmitted light behind the reflection mirror, that is, the background was evaluated. As a result, the range of the reflectance of 40% to 15% was good. When the reflectance exceeds 40%, the reflection intensity of external light is large, and when the reflectance is equal to or less than 15%, the intensity of image light is too small. When the reflectance range was set to 35% to 20%, image information with a good brightness could be visually recognized when the information was displayed well, and the background of the mirror could be seen when the information was not displayed.

### <Example 1 of light source device>

Subsequently, the configuration of an optical system housed in the case of the light source device 101' or the like will be described in detail with reference to Figs. 8, 9(a), and 9(b).

Figs. 8 and 9 show a plurality of (two in this example) LEDs 14a and 14b that make up the light source, and these are mounted at predetermined positions with respect to an LED collimator 15. In addition, the LED collimator 15 is formed of a light transmissive resin such as acrylic, for example. Then, as also shown in Fig. 9(b), the LED collimator 15 has a conical convex outer peripheral surface 156 obtained by rotating a parabolic cross section, and the top thereof has a concave portion 153 in which a convex portion (that is, a convex lens surface) 157 is formed in its central portion. In addition, the central portion of the flat surface portion has a convex lens surface 154 protruding outward (or may be a concave lens surface recessed inward). In addition, the paraboloid 156 that forms the conical outer peripheral surface of the LED collimator 15 is set within the range of an angle at which light emitted from the LEDs 14a and 14b in the peripheral direction can be totally reflected thereinside, or a reflection surface is formed.

In addition, each of the LEDs 14a and 14b are arranged at predetermined positions on the surface of the so-called LED substrate 102, which is a circuit board thereof. The LED substrate 102 is fixed to the LED collimator 15 by arranging the LED 14a or 14b on the surface so as to be located at the central portion of the concave portion 153.

According to such a configuration, due to the LED collimator 15 described above, among the light beams emitted from the LED 14a or 14b, in particular, light beams emitted upward (to the right in the diagram) from the central portion thereof are condensed into parallel light beams by the two convex lens surfaces 157 and 154 forming the outer shape of the LED collimator 15. In addition, the light beams emitted from the other portion toward the peripheral direction are reflected by the paraboloid forming the conical outer peripheral surface of the LED collimator 15, and are similarly condensed into parallel light beams. In other words, according to the LED collimator 15 having a convex lens formed in the central portion and a paraboloid formed in the peripheral portion, almost all the light beams generated by the LEDs 14a or 14b can be extracted as parallel light beams. Therefore, it is possible to improve the utilization efficiency of the generated light.

In addition, the polarization conversion element 21 is provided on the light emission side of the LED collimator 15. As is apparent from Fig. 9, the polarization conversion element 21 is configured such that a columnar (hereinafter, a parallelogram column) light transmissive member having a parallelogram cross section and a columnar (hereinafter, a triangular column) light transmissive member having a triangular cross section are combined and a plurality of combinations of columnar light transmissive members are arranged in an array in parallel to a plane perpendicular to the optical axis of the parallel light from the LED collimator 15. In addition, a polarizing beam splitter (hereinafter abbreviated as a "PBS") film 211 and a reflective film 212 are alternately provided at the interface between the adjacent light transmissive members arranged in an array, and a λ/2 phase plate 213 is provided on the emission surface where the light incident on the polarization conversion element 21 and transmitted through the PBS film 211 is emitted.

A rectangular synthetic diffusion block 16 shown in Fig. 9(a) is further provided on the emission surface of the polarization conversion element 21. That is, the light beams emitted from the LED 14a or 14b become parallel light beams by the action of the LED collimator 15 to be incident on the synthetic diffusion block 16 and is diffused by a texture 161 on the emission side, and then reaches the light guide 17.

The light guide 17 is a member formed in a rod shape having an approximately triangular cross section (see Fig. 9(b)) by using a light transmissive resin, such as acrylic, for example. In addition, as is apparent from Fig. 8, the light guide 17 includes a light guide light incidence portion (surface) 171 facing the emission surface of the synthetic diffusion block 16 with a first diffusion plate 18a interposed therebetween, a light guide light reflecting portion (surface) 172 that forms an inclined surface, and a light guide light emission portion (surface) 173 facing the liquid crystal display panel 52, which is a liquid crystal display element, with a second diffusion plate 18b interposed therebetween.

On the light guide light reflecting portion (surface) 172 of the light guide 17, as also shown in Fig. 8 that is a partially enlarged view thereof, a number of reflection surfaces 172a and connection surfaces 172b are alternately formed in a sawtooth shape. Then, the reflection surface 172a (a line segment rising to the right in the diagram) forms αn (n: natural number, for example, 1 to 130 in this example) with respect to the horizontal plane indicated by the dashed line in the diagram. As an example, here, αn is set to be equal to or less than 43° (however, 0° or more).

The light guide incidence portion (surface) 171 is formed in a curved convex shape inclined toward the light source side. According to this, the parallel light beams from the emission surface of the synthetic diffusion block 16 are diffused through the first diffusion plate 18a to be incident. As is apparent from the diagram, the incident light reaches the light guide light reflecting portion (surface) 172 while being slightly bent (deflected) upward by the light guide incidence portion (surface) 171, and is reflected herein to reach the liquid crystal display panel 52 provided on the upper emission surface in the diagram.

According to the information display device 48 described in detail above, it is possible to further improve the light utilization efficiency or its uniform lighting characteristics, and at the same time, it is possible to manufacture the information display device 48 in a small size and at low cost by including a modularized light source device for S-polarized wave. In addition, in the above description, the polarization conversion element 21 is attached after the LED collimator 15. However, the present invention is not limited thereto, and the same function and effect can be obtained by providing the polarization conversion element 21 in the optical path leading to the liquid crystal display panel.

In addition, on the light guide light reflecting portion (surface) 172, a number of reflection surfaces 172a and connection surfaces 172b are alternately formed in a sawtooth shape, and the illumination light flux is totally reflected on each reflection surface 172a to move upward. In addition, a narrow-angle diffusion plate is provided on the light guide light emission portion (surface) 173, so that the illumination light flux is incident on the light direction conversion panel 54 for controlling the directional characteristic as an approximately parallel diffused light flux and is incident on the liquid crystal display panel 52 from the oblique direction. In the present embodiment, the light direction conversion panel 54 is provided between the light guide emission surface 173 and the liquid crystal panel 52, but the same effect can be obtained by providing the light direction conversion panel 54 on the emission surface of the liquid crystal panel 52.

### <Example 2 of light source device>

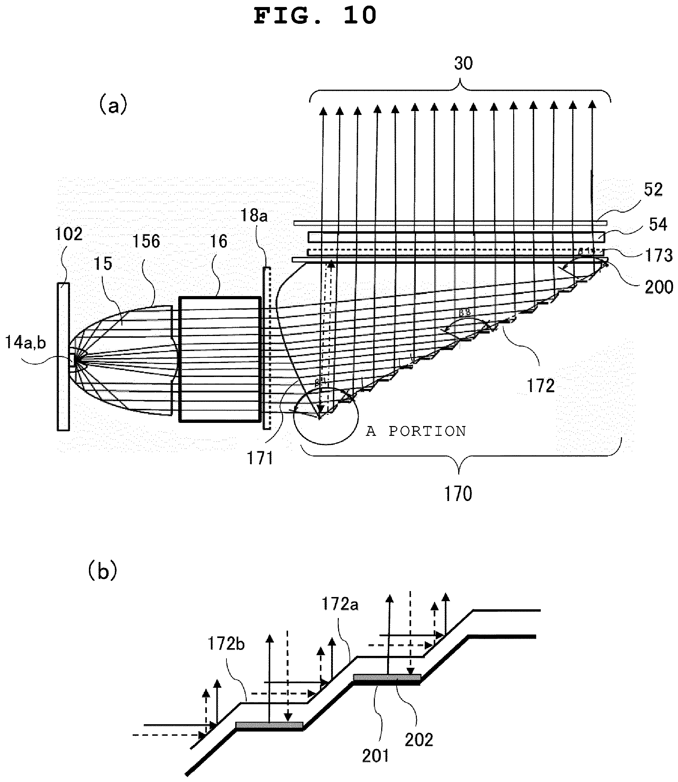

Fig. 10 shows another example of the configuration of an optical system, such as the light source device 101'. As in the example shown in Fig. 9, a plurality of (two in this example) LEDs 14a and 14b that make up the light source are shown, and these are mounted at predetermined positions with respect to the LED collimator 15. In addition, the LED collimator 15 is formed of a light transmissive resin such as acrylic, for example. Then, as in the example shown in Fig. 9, the LED collimator 15 has a conical convex outer peripheral surface 156 obtained by rotating a parabolic cross section, and the top thereof has a concave portion 153 in which a convex portion (that is, a convex lens surface) 157 is formed in its central portion. In addition, the central portion of the flat surface portion has a convex lens surface 154 protruding outward (or may be a concave lens surface recessed inward). In addition, the paraboloid 156 that forms the conical outer peripheral surface of the LED collimator 15 is set within the range of an angle at which light emitted from the LED 14a in the peripheral direction can be totally reflected thereinside, or a reflection surface is formed.

In addition, each of the LEDs 14a and 14b are arranged at predetermined positions on the surface of the so-called LED substrate 102, which is a circuit board thereof. The LED substrate 102 is fixed to the LED collimator 15 by arranging the LED 14a or 14b on the surface so as to be located at the central portion of the concave portion 153.

According to such a configuration, due to the LED collimator 15 described above, among the light beams emitted from the LED 14a or 14b, in particular, light beams emitted upward (to the right in the diagram) from the central portion thereof are condensed into parallel light beams by the two convex lens surfaces 157 and 154 forming the outer shape of the LED collimator 15. In addition, the light beams emitted from the other portion toward the peripheral direction are reflected by the paraboloid forming the conical outer peripheral surface of the LED collimator 15, and are similarly condensed into parallel light beams. In other words, according to the LED collimator 15 having a convex lens formed in the central portion and a paraboloid formed in the peripheral portion, almost all the light beams generated by the LEDs 14a or 14b can be extracted as parallel light beams. Therefore, it is possible to improve the utilization efficiency of the generated light.

In addition, a light guide 170 is provided on the light emission side of the LED collimator 15 with the first diffusion plate 18a interposed therebetween. The light guide 170 is a member formed in a rod shape having an approximately triangular cross section (see Fig. 10(a)) by using a light transmissive resin, such as acrylic, for example. In addition, as is apparent from Fig. 10(a), the light guide 170 includes an incidence portion (surface) 171 of the light guide light 170 facing the emission surface of the diffusion block 16 with the first diffusion plate 18a interposed therebetween, a light guide light reflecting portion (surface) 172 that forms an inclined surface, and a light guide light emission portion (surface) 173 facing the liquid crystal display panel 52, which is a liquid crystal display element, with a reflective polarizing plate 200 interposed therebetween.

For example, when the reflective polarizing plate 200 having a characteristic of reflecting P-polarized light (transmitting S-polarized light) is selected, the P-polarized wave of the natural light emitted from the LED as a light source is reflected, passes through a λ/4 plate 202 provided in the light guide light reflecting portion 172 shown in Fig. 10(b) and is reflected by a reflection surface 201, and passes through the λ/4 plate 202 again to be converted into an S-polarized wave, and all the light fluxes incident on the liquid crystal display panel display 52 are unified as S-polarized waves.

Similarly, when the reflective polarizing plate 200 having a characteristic of reflecting S-polarized light (transmitting P-polarized light) is selected, the S-polarized wave of the natural light emitted from the LED as a light source is reflected, passes through the λ/4 plate 202 provided in the light guide light reflecting portion 172 shown in Fig. 10(b) and is reflected by the reflection surface 201, and passes through the λ/4 plate 202 again to be converted into a P-polarized wave, and all the light fluxes incident on the liquid crystal display panel 52 are unified as P-polarized waves. Even with the configuration described above, it is possible to realize polarization conversion.

### <Example 3 of light source device>

Another example of the light source device is shown in Fig. 11. In addition, the arrangement of the light source device and the liquid crystal display panel 52 in this example is shown in Figs. 5 to 6. The light source device converts the divergent light flux of natural light (a mixture of P-polarized wave and S-polarized wave) from the LED into an approximately parallel light flux by the collimator lens 18 and reflects the approximately parallel light flux toward the liquid crystal display panel 52 by the reflective light guide 304. The reflected light is incident on the wavelength plate and the reflective polarizing plate 49 arranged between the liquid crystal display panel 52 and the reflective light guide 304. A specific polarized wave (for example, an S-polarized wave) is reflected by the reflective polarizing plate and returns to the reflection surface with its phase converted by the wavelength plate, and passes through the retardation plate again to be converted into a polarized wave (for example, a P-polarized wave) that passes through the reflective polarizing plate.

As a result, the natural light from the LED is aligned with a specific polarized wave (for example, a P-polarized wave). Similar to the example described above, a plurality of LEDs that make up the light source are shown (although only one is shown in Figs. 11 to 14 due to the vertical cross section), and these are mounted at predetermined positions with respect to the LED collimator 18. In addition, the LED collimator 18 is formed of a light transmissive resin such as acrylic or glass, for example. Then, the LED collimator 18 has a conical convex outer peripheral surface obtained by rotating a parabolic cross section, and the top thereof has a concave portion in which a convex portion (that is, a convex lens surface) is formed in its central portion. In addition, the central portion of the flat surface portion has a convex lens surface protruding outward (or may be a concave lens surface recessed inward). In addition, the paraboloid that forms the conical outer peripheral surface of the LED collimator 18 is set within the range of an angle at which light emitted from the LED 18 in the peripheral direction can be totally reflected thereinside, or a reflection surface is formed.

In addition, each LED is arranged at a predetermined position on the surface of the so-called LED substrate 102, which is a circuit board thereof. The LED substrate 102 is fixed to the LED collimator 18 by arranging the LED on the surface so as to be located at the central portion of the concave portion.

According to such a configuration, due to the LED collimator 18, among the light beams emitted from the LED, in particular, light beams emitted from the central portion thereof are condensed into parallel light beams by the two convex lens surfaces forming the outer shape of the LED collimator 18. In addition, the light beams emitted from the other portion toward the peripheral direction are reflected by the paraboloid forming the conical outer peripheral surface of the LED collimator 18, and are similarly condensed into parallel light beams. In other words, according to the LED collimator 18 having a convex lens formed in the central portion and a paraboloid formed in the peripheral portion, almost all the light beams generated by the LED can be extracted as parallel light beams. Therefore, it is possible to improve the utilization efficiency of the generated light.

In addition, an optical element for converting the diffusion characteristics in the vertical direction and the horizontal direction (not shown in the front-rear direction in the diagram) in the cross-sectional view shown in Fig. 11 may be provided on the light emission side of the LED collimator 18. In order to efficiently emit light to the reflection surface of the light guide, the diffusion angle in the vertical direction of the screen may be adjusted to the width of the surface perpendicular to the reflection surface of the light guide, and the number of LEDs and the divergence angle from the optical element 303 may be optimally designed as design parameters so that the surface density of the light flux emitted from the liquid crystal display panel 52 is uniform in the horizontal direction.

When the above-described reflective polarizing plate having a characteristic of reflecting S-polarized light (transmitting P-polarized light) is selected, the S-polarized wave of the natural light emitted from the LED as a light source is reflected, passes through a retardation plate (not shown) arranged between the reflective polarizing plate and the reflective light guide and is reflected by the reflection surface, and passes through the retardation plate again to be converted into a P-polarized wave and incident on the liquid crystal display panel 52. In the liquid crystal panel 52, the polarization axis is twisted according to the brightness value of the image signal to obtain the S-polarized light, and the S-polarized light is emitted from the liquid crystal panel 52. At this time, the image light is S-polarized light, and its intensity is modulated according to the brightness signal. For the thickness of the retardation plate used at this time, it is necessary to select the optimum value according to the angle of incidence of light on the retardation plate, and the optimum value is in the range of λ/16 to λ/4. At this time, the uniformity of brightness can be improved by designing the reflection angle of the reflective light guide as a design parameter so that the angle of incidence on the liquid crystal display panel is constant over the entire screen area.

### <Lenticular lens>

In order to control the diffusion distribution of the image light from the liquid crystal display panel 52 as shown in Fig. 4, the lens shape is optimized by providing a lenticular lens as the light direction conversion panel 54 between the light source device 101 and the liquid crystal display panel 52 or on the surface of the liquid crystal display panel 52, so that the emission characteristics in one direction can be controlled. In addition, by arranging the microlens array in a matrix, the emission characteristics of the image light flux from the information display device 52 can be controlled in the X-axis and Y-axis directions. As a result, it is possible to obtain the information display device having desired diffusion characteristics.

The operation of the lenticular lens will be described. By optimizing the lens shape, the lenticular lens can efficiently reflect or diffuse light emitted from the above-described information display device 48 on the transparent sheet 35 on the window glass 6. That is, by providing a sheet for controlling the diffusion characteristics of the image light from the information display device 52 by combining two lenticular lenses or arranging a microlens array in a matrix, the brightness (relative brightness) of the image light in the X-axis and Y-axis directions can be controlled according to its reflection angle (vertical direction is 0°). In the present embodiment, due to such a lenticular lens, compared with a conventional case, the brightness (relative brightness) of light due to reflection or diffusion is increased by making the brightness characteristics in the vertical direction steep as shown in Fig. 21(b) and by changing the balance of the directional characteristic in the vertical (positive and negative directions of the Y axis) direction. Therefore, like the image light from the surface-emitting laser image source, image light having a narrow diffusion angle (high straightness) and only a specific polarized component is obtained so as to reach the observer's eyes efficiently.

In addition, with the light source device described above, it is possible to realize an information display device that emits specific polarized light to emit an image light flux almost parallel to a specific direction by enabling the directional characteristic, which is significantly narrower in both the X-axis direction and the Y-axis direction than the emission light diffusion characteristic (denoted as conventional in the diagram) from the general liquid crystal panel shown in Figs. 21(a) and 21(b).

Fig. 20 shows an example of the diffusion characteristics of the reflective light guide of the present embodiment or the diffusion characteristics including the above-described lenticular lens. In this example, in particular, the characteristic in the X direction (vertical direction) is shown. The characteristic O indicates a brightness characteristic in which the peak in the light emission direction is at an angle around 30° upward from the vertical direction (0°) and is symmetrical up and down. In addition, the characteristic A or B in Fig. 20 indicates an example of a characteristic in which image light above the peak brightness is condensed at around 30° to increase the brightness (relative brightness). Therefore, in the characteristic A or B, at an angle exceeding 30°, the brightness (relative brightness) of light is sharply reduced as compared with the characteristic O.

That is, according to the optical system including the above-described lenticular lens or the above-described light source system, the image light from the information display device 52 can be reflected or diffused in a state in which the brightness is increased (enhanced) in a specific direction through the transparent sheet 51 (including a unidirectional sheet shown in Figs. 15 and 16) on the window glass 6 described below. As a result, like the image light from the surface-emitting laser image source, the image light from the information display device 48 can efficiently reach the eyes of the observer outdoors or indoors as light having a narrow diffusion angle (high straightness) and only a specific polarized component. According to this, even if the intensity (brightness) of the image light from the information display device 48 is reduced, the observer can accurately recognize the image light to obtain the information. In other words, by further reducing the output of the information display device 48, it is possible to realize an information display system with lower power consumption.

A general TFT (Thin Film Transistor) liquid crystal panel 52 has different brightness and contrast performance depending on the characteristics of the liquid crystal and the polarizing plate according to the light emission direction. The characteristics (in the present embodiment, +5°) at an angle slightly deviated from the emission angle perpendicular (emission angle of 0°) to the panel surface are excellent. This is because the characteristic of twisting light in the vertical direction of the liquid crystal is not 0° when the applied voltage is maximum.

On the other hand, the contrast performance in the vertical direction is excellent in the range of -15° to +15°. When the contrast performance is combined with the brightness characteristic, the best characteristics can be obtained when used in the range of ±10° centered on 5°.

In addition, the characteristics of the brightness and the viewing angle in the horizontal direction of the panel are excellent at the emission angle perpendicular (emission angle of 0°) to the panel surface. This is because the characteristic of twisting light in the horizontal direction of the liquid crystal is 0° when the applied voltage is maximum.

Similarly, the contrast performance in the horizontal direction is excellent in the range of -5° to -10°. When the contrast performance is combined with the brightness characteristic, the best characteristics can be obtained when used in the range of ±5° centered on -5°. Therefore, regarding the emission angle of the image light emitted from the liquid crystal display panel, making the light incident on the liquid crystal display panel from the direction in which the most excellent characteristics are obtained by the light flux direction changing means 204 provided in the light guide 203 of the light source device 101 and modulating the light with the image signal improves the image quality and performance of the information display device 48.

In order to bend the image light from the liquid crystal display panel 52 as an information display element in a desired direction, it is desirable to provide the light direction conversion panel 54 using a lenticular lens sheet or the like on the emission surface of the liquid crystal display panel.

### <Unidirectional transparent sheet: transmissive example 1>

Fig. 15 shows the configuration of a transparent sheet 51' for diffusing the image light flux to the outside of the vehicle or outdoors. A polarizing plate 57 that transmits a P wave and a retardation plate 58 are provided on the image light flux incidence surface of a transparent diffusion sheet material 55, so that and the image light flux reflected by the transparent diffusion sheet material 55 is prevented from returning indoors (space where the information display device is provided). As a result, the observer does not have any trouble with the image projected on a window glass 6'. The optimum phase difference of the retardation plate 58 provided between the polarizing plate 57 and the transparent diffusion sheet material 55 may be selected according to the diffusion characteristics of the transparent diffusion sheet. When the diffusion angle is large, the optimum phase difference close to λ/4 is preferable. When the diffusion angle is small, good conversion performance can be obtained by combination with a λ/8 plate or the like.

In addition, instead of the transparent diffusion sheet material 55 described above, a sheet having an antireflection coating to increase the reflectance of a specific polarized wave may be used as a substitute for the polarizing plate. Alternatively, the reflectance of the image light flux can be increased by providing an antireflection coating on the surface of the polarizing plate. At the same time, it was confirmed that the intensity of the double image generated by the reflected image of the window glass 6' could be significantly reduced, that is, it was confirmed that the same effect as in the above-described technique could be obtained.

In addition, instead of the transparent diffusion sheet material 51' described above, for example, PDLC (Polymer Dispersed Liquid Crystal) of Santech Display Co., Ltd. may be used. This may be used as a substitute for the transparent sheet by diffusing the image light without applying a voltage in the information display state and applying a voltage to make a transparent state in the information non-display state. In addition, the experiments of the inventors clearly showed that it was possible to realize a screen having a new function capable of changing the transmittance according to the image by changing the voltage applied to the PDLC to change the diffusion characteristics and by modulating the applied voltage in synchronization with ON/OFF or strength of the image signal.

It is possible to realize an information display system having a desired viewing range by diffusing the narrow-angle image light flux of the information display device 48 in the vertical and horizontal directions.

### <Unidirectional transparent sheet: transmissive example 2>

Fig. 16 shows a configuration in which an image light control film 70 is used as an external light control film (hereinafter, denoted by reference numeral 70) in addition to the transparent sheet 51' for diffusing the image light flux to the outside of the vehicle or outdoors. The S-polarized wave of sunlight incident on the window glass 220 from an oblique direction is reflected, and the P-polarized wave of the sunlight is transmitted through the window glass 220 to move toward the transparent sheet 51'. At this time, the sunlight is absorbed by a black portion 70a provided on the external light control film 70 and accordingly does not reach the inside of the room or the vehicle where the information display device is arranged. In addition, since the sunlight is not mixed with the image light from the information display device 48, degradation of the image quality is prevented. The transparent sheet 51' is formed by the transparent diffusion sheet material 55. By using a film stretched while melting a thermoplastic polymer in which nanoparticle zirconium or nanoparticle diamond with high refractive index are dispersed, for example, "Kaleido Screen" manufactured by JXTG Energy Corporation, the transparent sheet 51' is transparent when no image information is displayed, so that the transparent sheet 51' does not prevent the observer from visually recognizing the scenery of the outside (outside the store). On the other hand, when displaying information, the image light is diffused and reflected. As a result, it is possible to realize a so-called unidirectional display to make the image information visually recognized by the observer outside the store (space).

In addition, since the image light incident on the window glass 6 from an oblique direction passes through a transparent portion 70b without being almost shielded by the black portion 70a, the image light is diffused by the transparent sheet 51', so that information display toward the outside (outside the vehicle or outside the store) becomes possible. As the external light control film 70, for example, a viewing angle control film (VCF: View Control Film) of Shin-Etsu Polymer Co., Ltd. is suitable. Since the structure is a sandwich structure in which transparent silicon and black silicon are alternately arranged and synthetic resin is arranged on the light incidence and emission surface, the same effect as the external light control film of the present embodiment can be expected. That is, it is desirable that the pitch h between the transparent portion 70b and the black portion 70a of the viewing angle control film is 1/3 or less of the pixel of the image information to be displayed. At this time, regarding the thickness W, h/w may be set to be larger than 1.0 when the viewing angle α is larger than 90°, and h/w may be set to be smaller than 1.0 when the viewing angle α is smaller than 90°. In addition, the energy loss can be reduced by matching the inclination angle γ of a black portion with the image light incidence angle determined by the mounting positions of the information display device 48 and the window glass.

On the other hand, if the cloudiness (HAZE) defined by the ratio between the diffusion transmittance and the parallel light transmittance of the transparent sheet 51' is 10% or less, there is no practical problem, but the cloudiness (HAZE) is preferably 4% or less. In addition, by providing a sheet having an antireflection coating to increase the reflectance of a specific polarized wave instead of the transparent diffusion sheet material 55 described above, the reflectance of the image light flux can be increased. At the same time, the intensity of the double image generated by the reflected image of the window glass 6 can be significantly reduced. That is, it was confirmed that the same effect as in the above-described technique could be obtained.

In addition, instead of the transparent diffusion sheet material 55 described above, for example, PDLC (Polymer Dispersed Liquid Crystal) of Santech Display Co., Ltd. may be used. This may be used as a substitute for the transparent sheet by diffusing the image light without applying a voltage in the image display state and applying a voltage to make a transparent state in the image non-display state. In addition, the experiments of the inventors clearly showed that it was possible to realize a screen having a new function capable of changing the transmittance according to the image by changing the voltage applied to the PDLC to change the diffusion characteristics and by modulating the applied voltage in synchronization with ON/OFF or strength of the image signal.

According to the embodiment described in detail above, like the image light from the surface-emitting laser image source, the image light from the information display device 48 can be made to be light having a narrow diffusion angle (high straightness) and only a specific polarized component. Therefore, it is possible to display various kinds of information on the outside of the space by using, for example, a show window 6 that makes up the space, so that it is possible to significantly improve the show window utilization efficiency. In addition, an information display system capable of displaying high-quality image information with high resolution and improving the utilization efficiency of light emitted from the light source to significantly reduce power consumption is realized. In addition, when displaying a larger image, a large liquid crystal display panel 52 in which a plurality of relatively inexpensive liquid crystal display panels are combined and their bonding portions are continuously integrated can also be adopted as the liquid crystal display panel 52, which is an information display element that makes up the information display device 48 together with the light source device 101. In this case, by making the light flux from the light source device 101 directed to the transparent sheet 51 provided in the window glass 220 in parallel and reflected and diffused in one direction by the transparent sheet 51, it is possible to display the larger image information while significantly reducing the power consumption.

In addition, in the above description, an example has been described in which the information display system is applied to the store, which is a space partitioned by the show window that is a transparent member such as glass, and the show window 6 is used for unidirectional display with respect to the inside or the outside. However, the present invention is not limited to such an example. That is, as long as a predetermined space is partitioned by using a transparent member such as glass, the information display system of the present invention can realize unidirectional display with respect to the inside or the outside by using the transparent member that partitions the space. Hereinafter, other examples of the information display system will be described.

### <Vehicular information display system>

According to the embodiment described above, as shown in Fig. 1, the image light generated from the information display device 48 and emitted toward the show window 220, which is a projected member, (1) is made to be light having a narrow diffusion angle (high straightness) and only a specific polarized component like the image light from the surface-emitting laser image source, so that it is possible to display high-quality image information with high resolution and improve the emission light utilization efficiency to significantly reduce the power consumption. At the same time, (2) as is apparent from the above-described components, it is possible to configure the entire outer shape of the device into a flat surface (panel). Therefore, by using these features, various examples of a so-called vehicular information display system, in which the information display system of the present invention is applied to vehicles such as automobiles, trains, and aircraft instead of spaces such as stores, will be described in detail below.

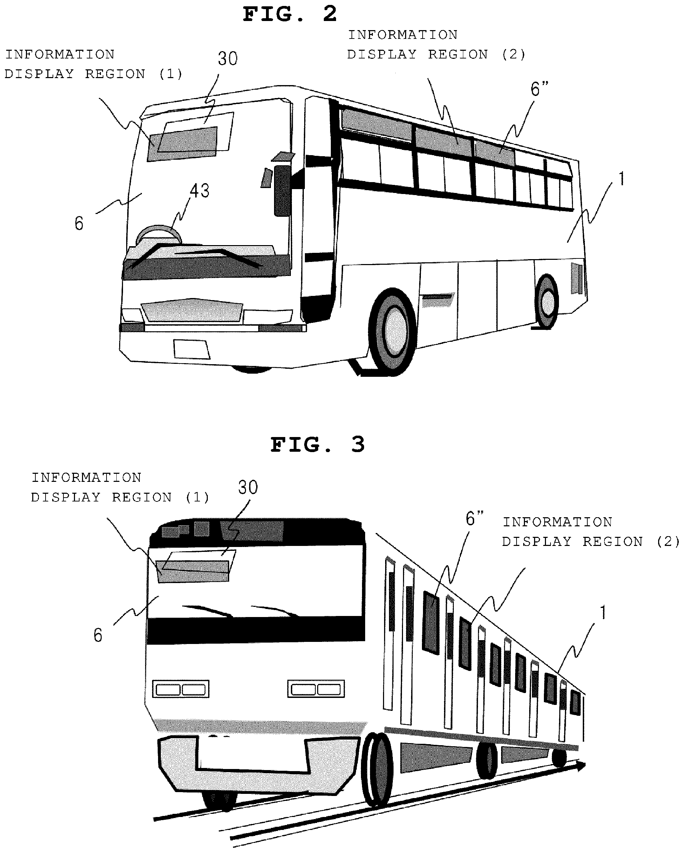

Figs. 2 and 3 show examples in which the above-described information display device 48 and the like are mounted on a commercial vehicle, and image information is displayed on a part of a windshield 6 (above a steering wheel 43) or a part (gray portion) or entirety of a side glass 6" or the like. Figs. 2 and 3 show examples of the information display region.

As a specific means for displaying image information through (a part or entirety) the window glass of an automobile, for example, the information display device 48 including the large liquid crystal display panel 52 shown in Fig. 11 or 12 is provided along the window glass of a vehicle body 1. On the back surface of the liquid crystal display panel 52, a plurality of reflective light guides 304 that make up the light source device are provided as a light source device, so that image light having a narrow diffusion angle (high straightness) and a uniform polarization plane, such as light from a surface-emitting laser light source, is obtained. The light flux is displayed outside the vehicle through the windshield 6, the rear glass 6' (not shown), or the side glass 6" in a state in which the light intensity of the light flux is modulated according to the image signal by the liquid crystal display panel 52. The liquid crystal display panel 52 can be used as a conventional TV panel, and can also be used as a large liquid crystal panel or a high-resolution 8k-equivalent panel.

In the use for commercial vehicles shown in Fig. 2, a curved windshield or rear glass may be used. When an image is observed from outside of the vehicle through the glass, the image may be distorted due to the refraction of the glass. However, it is desirable to distort the original image into a corrected shape in order to be able to reproduce the normal shape from the image observation side so that the image after passing through the glass becomes a regular image.

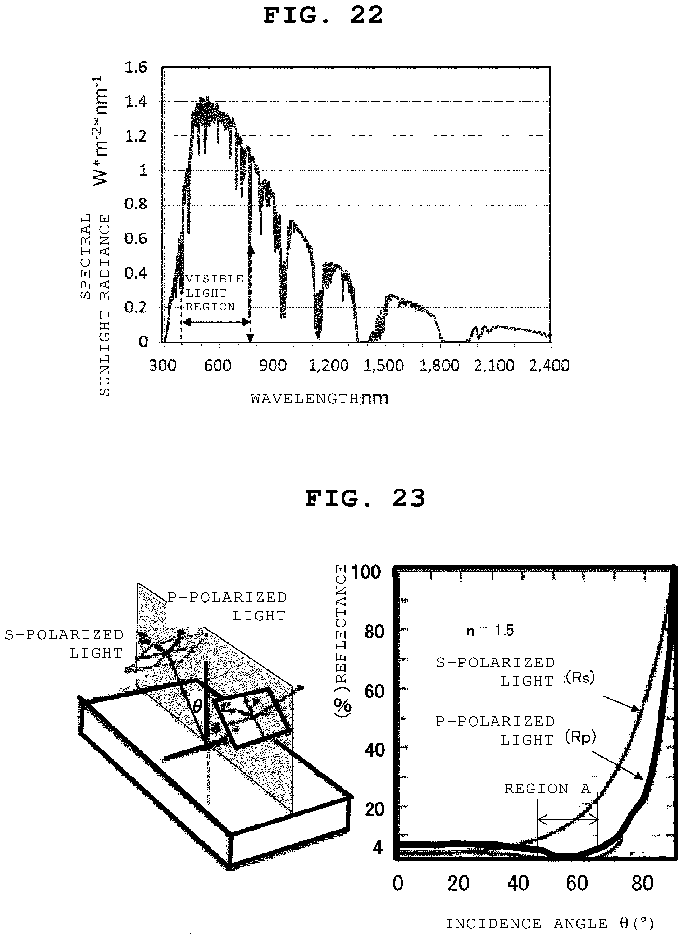

In addition, in the vehicular information display system, since the vehicle itself is exposed to natural light including sunlight, it is necessary to deal with such sunlight. As shown in Fig. 22, natural light such as sunlight is light in a wide wavelength range from ultraviolet rays to infrared rays. In addition, as for the polarization direction, light in a vibration direction perpendicular to the traveling direction of light and light in two types of polarization directions (hereinafter, referred to as S polarization and P polarization), which is light in the horizontal direction, are mixed. In particular, in a region where the angle of incidence on the windshield 6 exceeds 50°, as shown in Fig. 23, the reflectance on the glass surface differs depending on the S polarization or the P polarization and the incidence angle.

Therefore, in the present embodiment, based on the above-described findings of the inventors, that is, considering the fact that most of the sunlight penetrating through the windshield 6 was a P-polarized component, it was confirmed that, in order to suppress external light including sunlight emitted to the information display device, the reduction of the P wave component is particularly effective and it is effective to use the S wave component as image light emitted from the information display device and emitted outside the vehicle to be recognized by the observer.

While the various embodiments have been described in detail above, the present invention is not limited only to the embodiments described above, and includes various modification examples. For example, in the above embodiments, the entire system has been described in detail for easy understanding of the present invention. However, the present invention is not necessarily limited to having all the components described above. In addition, some of the components in one embodiment can be replaced with the components in another embodiment, and the components in another embodiment can be added to the components in one embodiment. In addition, for some of the components in each embodiment, addition, removal, and replacement of other components are possible.

### REFERENCE SIGNS LIST

- 1: Automobile (vehicle) body
- 6: Windshield
- 6": Side glass
- 15, 18: LED collimator
- 35: Reflection mirror
- 36: Tint plate
- 37: Diffusion sheet
- 48: Information display device
- 49: Reflective polarizing plate
- 50: Protection cover
- 51: Unidirectional transparent sheet
- 52: Liquid crystal display panel (element)
- 54: Light direction conversion panel
- 55: Transparent diffusion sheet material
- 57: Polarizing plate
- 58: Retardation plate
- 70a: Black portion
- 70b: Transparent portion
- 101: Light source device
- 201: Light source (LED element)
- 202: LED substrate
- 203: Light guide
- 205: Reflection sheet
- 220: Show window (window glass)

## Claims

1. A vehicular information display system, comprising:
a light source device that supplies light to an information display device,
wherein the light source device includes:
a point-shaped or planar light source;
an optical means for reducing a divergence angle of light from the light source; and
a light guide having a reflection surface that reflects light from the light source to propagate to the information display device,
the reflection surface of the light guide is arranged so as to face the information display device,
light in a specific polarization direction is emitted from the information display device as image light, and
the image light emitted in the specific polarization direction allows image information to be visually recognizable through a window glass by folding back an optical path with a reflective polarizing plate, and other polarized light is transmitted through the reflective polarizing plate so that a situation inside a vehicle can be visually recognized in an information non-display state.

2. The vehicular information display system according to claim 1,
wherein a divergence angle of image light from the information display device is within ±30° (half-brightness value) .

3. The vehicular information display system according to claim 2,
wherein the divergence angle is within ±10°.

4. The vehicular information display system according to claim 1,
wherein a horizontal diffusion angle and a vertical diffusion angle of image light from the information display device are different.

5. The vehicular information display system according to claim 1,
wherein the information display device has a liquid crystal panel element, and has contrast performance obtained by multiplying a contrast, which is obtained according to characteristics of polarizing plates provided on a light incidence surface and an emission surface, by a reciprocal of a cross transmittance of the reflective polarizing plate.

6. A vehicular information display system, comprising:
a light source device that supplies light to an information display device,
wherein the light source device includes:
a point-shaped or planar light source;
an optical means for reducing a divergence angle of light from the light source; and
a light guide having a reflection surface that reflects light from the light source to propagate to the information display device,
the reflection surface of the light guide is arranged so as to face the information display device, and image light in a specific polarization direction is generated by the information display device,
a part of a divergence angle of a light flux incident on the information display device from the light source is controlled by a shape and surface roughness of the reflection surface provided in the light source device,
light in a specific polarization direction is emitted from the information display device as image light, and
the image light emitted in the specific polarization direction allows image information to be visually recognizable through a window glass by folding back an optical path with a reflection mirror, and the reflection mirror has a reflectance of 20% or more and 40% or less with respect to light having a wavelength in a visible light region so that a situation inside a vehicle can be visually recognized in an information non-display state.

7. A vehicular information display system, comprising:
a light source device that supplies light to an information display device,
wherein the light source device includes:
a point-shaped or planar light source;
a first optical means for reducing a divergence angle of light from the light source; and
a second optical means for diffusing a light flux emitted from the first optical means in a horizontal direction of a screen of the information display device,
light from the light source is incident on a light guide arranged close to a light emission surface of the second optical means, reflected by a reflection surface provided in the light guide, and converted into light in a specific polarization direction by the information display device arranged at a position facing the reflection surface, and a part of a divergence angle of a light flux emitted from the information display device is controlled by a shape and surface roughness of a reflection surface provided in the light source device, and
the image light emitted in the specific polarization direction allows image information to be visually recognizable through a window glass by folding back an optical path with a reflection mirror, and the reflection mirror has a reflectance of 20% or more and 40% or less with respect to light having a wavelength in a visible light region so that a situation inside a vehicle can be visually recognized in an information non-display state.

8. The vehicular information display system according to claim 7,
wherein the divergence angle of the light flux emitted from the information display device is within ±30° (half-brightness value).

9. The vehicular information display system according to claim 8,
wherein the divergence angle is within ±10°.

10. The vehicular information display system according to claim 7,
wherein a horizontal diffusion angle and a vertical diffusion angle of the light flux emitted from the information display device are different.

11. An information display system, comprising:
a light source device that supplies light to an information display device,
wherein the light source device includes:
a point-shaped or planar light source;
an optical means for reducing a divergence angle of light from the light source; and
a light guide having a reflection surface that reflects light from the light source to propagate to the information display device,
the reflection surface of the light guide is arranged so as to face the information display device,
light in a specific polarization direction is emitted from the information display device as image light, and
the image light emitted in the specific polarization direction allows image information to be visually recognizable through a window glass by folding back an optical path with a reflective polarizing plate, and other polarized light is transmitted through the reflective polarizing plate so that an indoor situation can be visually recognized in an information non-display state.

12. The information display system according to claim 11,
wherein a divergence angle of image light from the information display device is within ±30° (half-brightness value) .

13. The information display system according to claim 12,
wherein the divergence angle is within ±10°.

14. The information display system according to claim 11,
wherein a horizontal diffusion angle and a vertical diffusion angle of image light from the information display device are different.

15. The information display system according to claim 11,
wherein the information display device has a liquid crystal panel element, and has contrast performance obtained by multiplying a contrast, which is obtained according to characteristics of polarizing plates provided on a light incidence surface and an emission surface, by a reciprocal of a cross transmittance of the reflective polarizing plate.

16. An information display system, comprising:
a light source device that supplies light to an information display device,
wherein the light source device includes:
a point-shaped or planar light source;
an optical means for reducing a divergence angle of light from the light source; and
a light guide having a reflection surface that reflects light from the light source to propagate to the information display device,
the reflection surface of the light guide is arranged so as to face the information display device, and image light in a specific polarization direction is generated by the information display device,
a part of a divergence angle of a light flux incident on the information display device from the light source is controlled by a shape and surface roughness of the reflection surface provided in the light source device,
light in a specific polarization direction is emitted from the information display device as image light, and
the image light emitted in the specific polarization direction allows image information to be visually recognizable through a window glass by folding back an optical path with a reflection mirror, and the reflection mirror has a reflectance of 20% or more and 40% or less with respect to light having a wavelength in a visible light region so that an indoor situation can be visually recognized in an information non-display state.

17. An information display system, comprising:
a light source device that supplies light to an information display device,
wherein the light source device includes:
a point-shaped or planar light source;
a first optical means for reducing a divergence angle of light from the light source; and
a second optical means for diffusing a light flux emitted from the first optical means in a horizontal direction of a screen of the information display device,
light from the light source is incident on a light guide arranged close to a light emission surface of the second optical means, reflected by a reflection surface provided in the light guide, and converted into light in a specific polarization direction by the information display device arranged at a position facing the reflection surface, and a part of a divergence angle of a light flux emitted from the information display device is controlled by a shape and surface roughness of a reflection surface provided in the light source device, and
the image light emitted in the specific polarization direction allows image information to be visually recognizable through a window glass by folding back an optical path with a reflection mirror, and the reflection mirror has a reflectance of 20% or more and 40% or less with respect to light having a wavelength in a visible light region so that an indoor situation can be visually recognized in an information non-display state.

18. The information display system according to claim 17,
wherein the divergence angle of the light flux emitted from the information display device is within ±30° (half-brightness value).

19. The information display system according to claim 18,
wherein the divergence angle is within ±10°.

20. The information display system according to claim 17,
wherein a horizontal diffusion angle and a vertical diffusion angle of the light flux emitted from the information display device are different.
